# EUROPÄISCHE PATENTSCHRIFT

(11) **EP 2 025 406 B1**
(45) Veröffentlichungstag und Bekanntmachung des Hinweises auf die Patenterteilung: **23.10.2013**
(21) Anmeldenummer: 08161771.4
(22) Anmeldetag: 05.08.2008
(51) Int. Cl.: B01L 3/00, G02B 21/26, G02B 21/34, G02B 21/00, G01N 21/64, G01N 21/27, G01B 5/00, G01N 35/00

(54) **Laser Scanning Mikroskop mit Magazin für Test-Objektträger**
Laser scanning microscope with magazine for test slides
Microscope à balayage par laser comprenant réceptacle pour lames portant des échantillons de contrôle

(30) Priorität: 17.08.2007 CH 13012007
(43) Veröffentlichungstag der Anmeldung: 18.02.2009
(60) Teilanmeldung: 10196198.5
(73) Patentinhaber: Tecan Trading AG, 8708 Männedorf (CH)
(72) Erfinder: Fischer, Frank, 5020, Salzburg (AT); Gebetsroither, Harald, 5082, Grödig (AT); Gfrörer, Andreas, 82549, Königsdorf (DE); Schenk, Andreas, 5082, Fürstenbrunn (AT)
(74) Vertreter: OK pat AG

(56) Entgegenhaltungen:
- US-A- 4 367 915
- US-A- 5 690 892
- US-A1- 2003 015 668
- US-B1- 6 847 481

## Beschreibung

Die Erfindung betrifft ein Laser Scanner-Gerät zum Abbilden von auf Objektträgern befindlichen, mit Fluoreszenzfarbstoffen behandelten, fluoreszierenden Proben.

Zum Abbilden von auf Objektträgern befindlichen, fluoreszierenden Proben werden seit langem konventionelle optische Rastermikroskope verwendet. Immer häufiger finden wegen der verbesserten Auflösung auch konfokale optische Rastermikroskope Verwendung. Ein solches Mikroskop ist beispielsweise aus GB 2 184 321 A bekannt. Viele der im Handel erhältlichen Mikroskope weisen Strahlteiler oder Filter zum Unterteilen des von der Probe emittierten Lichts in Strahlen mit unterschiedlichem Wellenlängenbereich auf. Dadurch können auch zwei fluoreszierende Farbstoffe verwendet und deren Emission mit zwei verschiedenen Detektoren gemessen werden.

Beim Verwenden von solchen Rastermikroskopen oder optischen Scannern ist es üblich, zumindest sporadisch die physikalischen Eigenschaften des Geräts zu testen. Dabei werden beispielsweise Intensitäts- und Empfindlichkeitstests an fluoreszierenden Testobjekten durchgeführt, wie dies z.B. aus den Patenten US 6,794,424 B2 und US 7,205,045 B2 bekannt ist. Allerdings muss zum Durchführen von solchen Tests jeweils ein geeignetes Testobjekt in das Gerät eingesetzt werden, was ein Beschädigen oder Verschmutzen der Testobjekte verursachen kann. Zudem liefern irrtümlicherweise oder falsch verwendete Testobjekte keine geeigneten Resultate, die zum Kalibrieren der empfindlichen Geräte verwendet werden könnten. Auch das Durchführen der Tests ist recht kompliziert und kann durch ein allfälliges Ausbleichen der fluoreszierenden Testobjekte zusätzlich in Frage gestellt werden.

Aus dem Dokument US 2003/015668 A1 (auch als US 6,984,828 B2 veröffentlicht) ist die Verwendung einer Art Objektträger als ein Kalibrier-Werkzeug für die Fluoreszenz-Mikroskopie bekannt. Dieser Objektträger weist eine spezielle Beschichtung beispielsweise aus fluoreszierenden Materialien auf, an Hand derer das Mikroskop, z.B. ein Fluoreszenz-Scanning-Mikroskop, eingestellt wird.

Zudem sind aus dem Stand der Technik höhenverstellbare Transport- bzw. Lagermagazine für die Lagerung und Bereitstellung von Objektträgern zu mikroskopischen Untersuchungs-Zwecken bekannt: So beschreibt das Dokument US 5,690,892 eine tragbare Kassette, die über einen Antrieb vertikal bewegbar ist. Ein Objektträger kann zwischen der Kassette und einem Mikroskop mittels einer horizontal bewegbaren, motorisierten Plattform bewegt werden. Mit dieser kombinierten Bewegung können Objektträger in vorgegebene Slots der Kassette positioniert und z.B. nach einer mikroskopischen Analyse entsprechend sortiert werden.

Das Dokument US 4,367,915 beschreibt ebenfalls ein solches Lager- und Transportmagazin eines Systems zur automatisierten Verarbeitung einer Vielzahl von Objektträgern, wobei das Magazin zum Indexieren mittels einer motorisch angetriebenen Gewindespindel höhenverstellbar ist. Um das Transportieren des Magazins zu ermöglichen, ist dieses über einen Arretiermechanismus reversibel an dem übergeordneten System befestigt.

Schliesslich ist auch aus dem Dokument US 6,847,481 B1 eine Objektträger-Kassette bekannt, welche höhenverstellbar an einem Indexer befestigt ist. Mittels eines Austauscher-Arms kann zudem ein Objektträger zwischen Kassette und Probentisch ausgetauscht werden. Die hier offenbarte Kassette kann als eine Doppelkassette für zwei nebeneinander angeordnete Reihen von Objektträgern ausgebildet sein.

Die Aufgabe der vorliegenden Erfindung liegt darin, ein alternatives Laser Scanner-Gerät zum Abbilden von auf Objektträgern befindlichen, mit Fluoreszenzfarbstoffen behandelten, fluoreszierenden Proben vorzuschlagen, mit welchem die notwendigen Kalibrierungen und Tests zuverlässiger durchgeführt werden können.

Diese Aufgabe wird mit einem Laser Scanner-Gerät gemäss den Merkmalen des unabhängigen Anspruchs 1 erfüllt. Das erfindungsgemässe Laser Scanner-Gerät zum Abbilden oder Vermessen von auf Objektträgern befindlichen, mit Fluoreszenzfarbstoffen behandelten, fluoreszierenden Proben umfasst ein Gehäuse, einen eine Probenebene definierenden Probentisch, eine Aufbewahrungseinheit und eine motorisierte Transportvorrichtung zum Bewegen eines Objektträgers von der Aufbewahrungseinheit zum Probentisch und zurück. Die Aufbewahrungseinheit umfasst einen Probenteil für Proben-Objektträger und einen Testteil für Testobjektträger, wobei der Probenteil und der Testteil mindestens je eine Lagerstelle aufweisen, die während des Betriebs des Laser Scanner-Geräts für die Transportvorrichtung zugänglich sind. Das erfindungsgemässe Laser Scanner-Gerät ist dadurch gekennzeichnet, dass der Testteil vom Probenteil getrennt und als mit dem Laser Scanner-Gerät fest verbundenes Testteil-Magazin für einen oder mehrere Test-Objektträger ausgebildet ist, wobei der Testteil mit einer in Bezug auf den Probentisch des Laser Scanner-Geräts beweglichen Stellplatte der Aufbewahrungseinheit fest verbunden ist, wodurch ein im Testteil aufbewahrter Test-Objektträger im Betriebszustand des Laser Scanner-Geräts für eine Bedienungsperson manuell nicht zugänglich ist. Der Probenteil ist axial über dem Testteil angeordnet und reversibel an der Stellplatte der Aufbewahrungseinheit montierbar, wobei der Probenteil als von aussen in das Gehäuse des Laser Scanner-Geräts einsetzbares Probenteil-Magazin für eine Vielzahl von Proben-Objektträgern ausgebildet ist, das über eine steckbare Verbindung mit der beweglichen Stellplatte verbunden ist. Die Stellplatte ist im wesentlichen senkrecht gegenüber der Probenebene des Probentischs verschiebbar, so dass ein beliebiger Objektträger auf das Niveau der vom Probentisch definierten Probenebene gebracht und zu einem linearen Transport auf den Probentisch bereitgestellt werden kann.

Zusätzliche bevorzugte und erfindungsgemässe Merkmale ergeben sich aus den abhängigen Ansprüchen.

Vorteile des erfindungsgemässen Laser Scanner-Geräts umfassen:
- Eines oder mehrere Testobjekte können dauernd im Gerät aufbewahrt werden, welches damit jederzeit zum Durchführen z.B. von Intensitäts- und Empfindlichkeitstests, von Cross-Talk -, Auflösungs -, Dynamik - , Laser-Rausch - und Laser-Intensitäts - Messungen und von Filter-Blockungs- und Filter-Transmissionsprüfungen sowie zum Überprüfen der Justage von optischen Komponenten, der geometrischen Bildparameter und der Bildausrichtung bereit ist.
- Es wird ein automatischer Kalibrierungszyklus bereitgestellt, wobei die Kalibrierung in vorgegebenen Intervallen stattfindet, die nur vom Gerät bestimmt sind und die von den üblichen Benutzern nicht beeinflusst werden können.
- Obwohl von beliebigen Bedienungspersonen austauschbare Probenmagazine in das Gerät eingesetzt werden können, sind die Testobjekte für diese Bedienungspersonen nur im Betrieb des Geräts und damit nicht manuell zugänglich.
- Normalerweise ist nur eine Service-Fachkraft in der Lage, Testobjekte im Gerät auszutauschen bzw. zu ersetzen.
- Der gleiche Mechanismus kann zum Aufbringen eines Proben-Objektträgers und auch zum Aufbringen eines Test-Objektträgers auf den Probentisch bzw. zum Entfernen jedes einzelnen dieser Objektträger vom Probentisch verwendet werden.
- Die im Gerät aufbewahrten Testobjekte sind gegenüber den Einflüssen der Umgebung weitestgehend geschützt und unterliegen praktisch keiner Alterung.
- Die Verwendung von im wesentlichen lichtstabilen Test-Objekten ermöglicht das Erzielen von konstanteren Resultaten.

Das erfindungsgemässe Laser Scanner-Gerät soll nun an Hand von schematischen Zeichnungen, die den Umfang der vorliegenden Erfindung nicht einschränken sollen und die Beispiele von besonders bevorzugten Ausführungsformen darstellen, erläutert werden. Dabei zeigen:
- Fig. 1: einen vertikalen Teilschnitt durch zwei Objektträgermagazine und einen vor diesen platzierten Objekttisch beim Transfer eines Objekt-trägers aus dem Proben-Magazin auf den Objekttisch;
- Fig. 2: einen horizontalen Teilschnitt durch die Objektträgermagazine und eine Draufsicht auf den vor diesen platzierten Objekttisch beim Transfer eines Test-Objektträgers aus dem Testobjekt-Magazin auf den Objekttisch;
- Fig. 3: vertikale Ansichten der Objektträgermagazine mit geöffnetem Test-objekt-Magazin, wobei
Fig. 3A die Einschubseite der beiden Objektträgermagazine in einer Frontansicht vom Objekttisch her gesehen, und
Fig. 3B die beiden Objektträgermagazine im Vertikalschnitt mit Blick gegen den Objekttisch hin zeigt;
- Fig. 4: einen vertikalen Teilschnitt durch den Objekttisch und dessen Höhenverstellung und Längsneigevorrichtung;
- Fig. 5: einen horizontalen Teilschnitt durch ein Laser Scanner-Gerät mit wesentlichen optischen Elementen, einer Scanner-Einheit mit Scanner-opf und einem Objekttisch mit Objektträgermagazinen;
- Fig. 6: zeigt einen Test-Objektträger, der das Format eines Standardobjekt-rägers für die Lichtmikroskopie aufweist und der ausschliesslich im wesentlichen lichtstabile Teststrukturen umfasst.

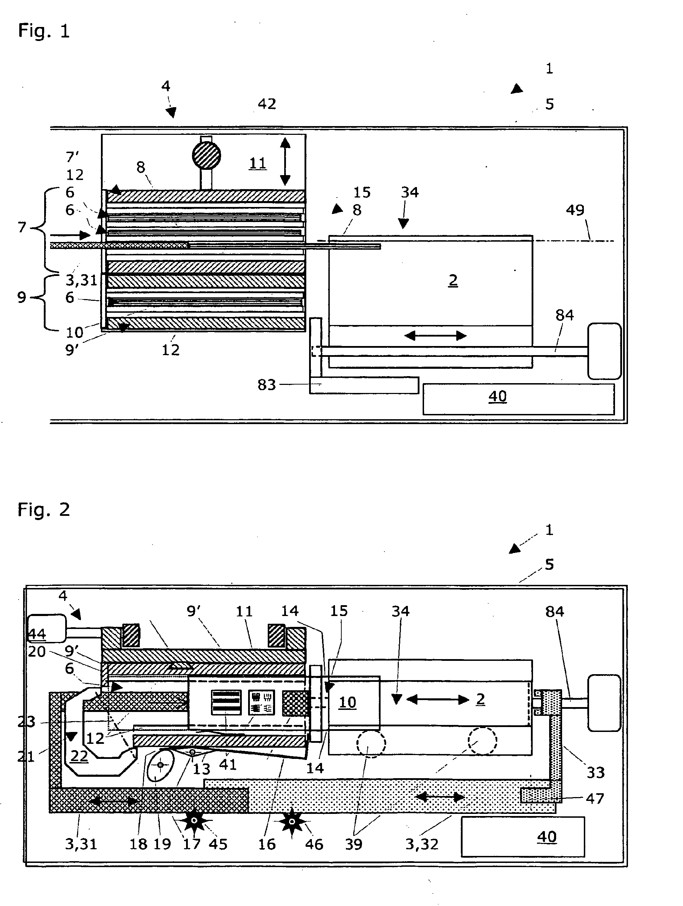

Figur 1 zeigt einen vertikalen Teilschnitt durch zwei Objektträgermagazine und einen vor diesen platzierten Objekttisch beim Transfer eines Objektträgers aus dem Proben-Magazin auf den Objekttisch. Diese beiden Objektträgermagazine gehören zu einem erfindungsgemässen Laser Scanner-Gerät 1 zum Abbilden und/oder Vermessen von auf Objektträgern befindlichen, mit Fluoreszenzfarbstoffen behandelten, fluoreszierenden Proben. Dieses Laser Scanner-Gerät umfasst einen eine Probenebene 49 definierenden Probentisch 2 und eine motorisierte Transportvorrichtung 3 zum Bewegen eines Objektträgers von einer Aufbewahrungseinheit 4 zum Probentisch 2 und zurück. Dabei umfasst die Aufbewahrungseinheit 4 je einen, zumindest je eine Lagerstelle 6 aufweisenden und während des Betriebs des Laser Scanner-Geräts 1 für die Transportvorrichtung 3 zugänglichen Probenteil 7 für Proben-Objektträger 8 und Testteil 9 für Test-Objektträger 10. In diesem erfindungsgemässen Laser Scanner-Gerät ist der Testteil 9 vom Probenteil 7 getrennt und als mit dem Laser Scanner-Gerät 1 fest verbundenes Testteil-Magazin 9' für einen oder mehrere Test-Objektträger 10 ausgebildet. Dadurch ist ein im Testteil 9 aufbewahrter Test-Objektträger 10 im Betriebszustand des Laser Scanner-Geräts 1 für eine Bedienungsperson manuell nicht zugänglich. Dies hat den Vorteil, dass jederzeit ein geeigneter Test-Objektträger bereitgestellt werden kann, ohne dass ein solcher Test-Objektträger 10 durch unsachgemässe Manipulationen durch Bedienungspersonen verschmutzt oder gar beschädigt werden kann. Das hier abgebildete Testteil-Magazin 9' umfasst eine offene Einschubseite 15.

In der hier dargestellten Ausführungsform ist der Probenteil 7 axial über dem Testteil 9 angeordnet und der Testteil 9 der Aufbewahrungseinheit 4 ist mit einer gegenüber dem Probentisch 2 des Laser Scanner-Geräts 1 beweglichen Stellplatte 11 der Aufbewahrungseinheit 4 fest verbunden. Dabei ist hier die Stellplatte 11 der Aufbewahrungseinheit 4 im wesentlichen senkrecht gegenüber der Probenebene 49 des Probentisches 2 verschiebbar. So kann ein beliebiger Objektträger 8,10 auf das Niveau der vom Probentisch 2 definierten Probenebene 49 gebracht und zu einem linearen Transport auf den Probentisch 2 bereit gestellt werden.

Abweichend von dieser Darstellung in Fig. 1 kann die Stellplatte auch fest stehen und damit eine unbewegliche Verbindung zwischen dem Laser Scanner-Gerät 1 und dem Testteil-Magazin 9' bereit stellen. In einem solchen Fall muss der Probentisch 2 gegenüber dem Testteil-Magazin 9' bewegt werden, wenn ein linearer Transport eines beliebigen Objektträgers 8,10 von einem Probenteil-Magazin 7' oder einem Testteil-Magazin 9' auf den Probentisch 2 erfolgen soll. Auch kann ganz auf eine Stellplatte 11 verzichtet und das Testteil-Magazin 9' irgendwo derart am Laser Scanner-Gerät 1 befestigt werden, dass dadurch ein im Testteil 9 aufbewahrter Test-Objektträger 10 im Betriebszustand des Laser Scanner-Geräts 1 für eine Bedienungsperson manuell nicht zugänglich ist.

Weitere, nicht dargestellte Alternativen umfassen ein Bewegen eines sich bereits in der Probenebene 49 des Probentisches 2 befindenden Test-Objektträgers 10 in dieser Proben Ebene 49 in Bezug auf einen unbewegten Probentisch 2, ein Bewegen des Probentischs 2 in dieser Proben Ebene 49 in Bezug auf ein unbewegtes Testteil-Magazin 9' oder aber ein gegenseitiges Bewegen von Probentisch 2 und Testteil-Magazin 9'. In allen diesen Fällen wird ein linearer Transport eines beliebigen Objektträgers 8,10 von einem Probenteil-Magazin 7' oder einem Testteil-Magazin 9' auf den Probentisch 2 ermöglicht. Zudem ist es vorstellbar, einen Roboter einzusetzen, der einen Objektträger 8,10 aus einem der Magazine 7',9' entnimmt und auf dem Probentisch 2 positioniert; in diesem Fall können die Magazine 7',9' und der Probentisch 2 zueinander eine praktisch beliebige Position einnehmen.

Es wird jedoch bevorzugt, dass die Probenebene 49 des Probentisches 2 im wesentlichen horizontal angeordnet ist, wobei der Probentisch 2 einen Objektträger 8,10 über sich trägt. Allerdings kann der Probentisch 2 auch über Kopf angeordnet werden, so dass der eingesetzte Objektträger 8,10 unter dem Probentisch angeordnet ist. Auch eine beliebige andere Lage der Probenebene 49 im Raum ist grundsätzlich denkbar, wird aber weniger bevorzugt.

Das Laser Scanner-Gerät 1, gemäss der in Figur 1 abgebildeten, ersten Ausführungsform umfasst vorzugsweise ein Gehäuse 5, wobei der Probenteil 7 als von aussen in das Gehäuse 5 des Laser Scanner-Geräts 1 einsetzbares Magazin 7' für eine Vielzahl von Proben-Objektträgern 8 ausgebildet ist. Der Probenteil 7 ist bevorzugt reversibel an der Stellplatte 11 der Aufbewahrungseinheit 4 montierbar. In der gezeigten Ausführungsform verbindet eine steckbare Schwalbenschwanzverbindung das Probenteil-Magazin 7' mit der hier vertikal beweglichen Stellplatte 11. Somit kann das Probenteil-Magazin 7' am Handgriff 42 festgehalten und in im wesentlichen vertikaler Richtung in das Gehäuse 5 gesenkt und am Schwalbenschwanz 43 der Stellplatte 11 eingesteckt werden. Da hier die beiden Magazine 7',9' senkrecht übereinander angeordnet sind, stellt das fest mit der Stellplatte 11 verschraubte Testteil-Magazin 9' vorzugsweise gerade den unteren Anschlag für das in den Schwalbenschwanz 43 eingeschobene Probenteil-Magazin 7' dar.

Die Lagerstellen 6 im Probenteil-Magazin 7' und/oder im Testteil-Magazin 9' sind zur Aufnahme von Objektträgern ausgebildet, welche im wesentlichen die Abmessungen eines Standardobjektträgers für die Lichtmikroskopie aufweisen. Vorzugsweise sind diese Lagerstellen 6 voneinander durch Lagerstege 12 getrennt, so dass diese Objektträger auf jeweils zwei sich jeweils im wesentlichen über die ganze Länge der Objektträger 8,10 erstreckenden Lagerstegen 12 ruhen.

Figur 2 zeigt einen horizontalen Teilschnitt durch die in der Fig. 1 gezeigten Objektträgermagazine und eine Draufsicht auf den vor diesen platzierten Objekttisch beim Transfer eines Test-Objektträgers aus dem Testobjekt-Magazin auf den Objekttisch. Das hier abgebildete Testteil-Magazin 9' umfasst eine offene Einschubseite 15, welche in ihrer Breite zumindest teilweise von je einer, sich im wesentlichen über die ganze Stapelhöhe des Magazins 9' erstreckenden, individuell wegschwenkbaren Klappe 16 abdeckbar ist. Diese Klappe 16 ist hier weggeschwenkt, so dass der abgebildete Test-Objektträger aus der Einschubseite 15 des Testteil-Magazins 9' herausgeschoben werden kann, ohne dass er dabei von der wegschwenkbaren Klappe 16 behindert würde.

Im Falle des Testteil-Magazins 9' bildet diese wegschwenkbare Klappe 16 einen Teil der Verriegelung, welche ermöglicht, dass ein im Testteil 9 aufbewahrter Test-Objektträger 10 im Betriebszustand des Laser Scanner-Geräts 1 für eine Bedienungsperson manuell nicht zugänglich ist. Im Fall des Probenteil-Magazins 7' ermöglicht diese wegschwenkbare Klappe 16 in ihrem eingeklappten Zustand, das Handhaben (beispielsweise das Schwenken oder Kippen) eines mit zumindest einem Proben-Objektträger 8 gefüllten Magazins 7', ohne dass ein Herausfallen dieser Objektträger befürchtet werden muss. Bevorzugt weisen sowohl das Probenteil-Magazin 7' als auch das Testteil-Magazin 9', zumindest aber das Probenteil-Magazin 7' auf seiner der Einschubseite 15 gegenüber liegenden Seite eine sich im wesentlichen über die ganze Stapelhöhe erstreckende Sperrplatte 20 auf, welche einen Teil der Breite dieser Seite abdeckt. Diese Sperrplatte 20 verhindert insbesondere beim Handhaben des Probenteil-Magazins 7' ein Herausfallen von Objektträgern auf der anderen Seite.

Bevorzugt sind die bei jedem Magazin 7',9' individuell wegschwenkbaren Klappen 16 an je einer seitlich der Magazine 7',9' angeordneten Achse 17 drehbar befestigt. Diese individuell wegschwenkbaren Klappen 16 umfassen je eine Winkelplatte 18, die sich vorzugsweise im wesentlichen über die ganze Stapelhöhe der Magazine 7',9' erstreckt. Diese wegschwenkbaren Klappen 16 werden zum Freigeben der Einschubseite 15 eines der Magazine 7',9' bevorzugt mit einer drehbaren, motorisch angetriebenen Exzenterwalze 19 gegen das jeweilige Magazin 7',9' gedrückt. Nicht abgebildete Varianten umfassen das Bewegen der wegschwenkbaren Klappen 16 mit einem Hebel, einem Stössel oder einem Schieber.

Damit die Objektträger 8,10 in den Magazinen 7',9' im wesentlichen spielfrei sitzen, umfasst jede dieser Lagerstellen 6 vorzugsweise eine Anpressfeder 13, welche elastisch eine Längskante 14 eines eingesetzten Objektträgers beaufschlägt. Zudem wird durch den Federdruck die jeweils gegenüberliegende Längskante 14 des Objektträgers 8,10 in einer durch das entsprechende Magazin 7',9' definierten Lage gehalten, welche geeignet ist, den Ursprung eines Koordinatensystems zu definieren. Desgleichen ist der Probentisch 2 bevorzugt mit beweglichen Anpressteilen 39 in der Form von Rollen ausgestattet (vgl. Fig. 2), welche ebenfalls dieselbe Längskante 14 in einer definierten Lage festhalten, wodurch derselbe Ursprung des Koordinatensystems auch auf dem Probentisch 2 gilt.

Zumindest das Probenteil-Magazin 7' umfasst bevorzugt an einer der Einschubseite 15 gegenüber liegenden Ecke eine sich im wesentlichen über die ganze Stapelhöhe erstreckende Kontrollöffnung 21 zum Feststellen der An- oder Abwesenheit eines Objektträgers in einer bestimmten Lagerstelle 6. Die An- oder Abwesenheit eines Objektträgers 8,10 in einer bestimmten Lagerstelle 6 kann mit unterschiedlichen Methoden und Vorrichtungen festgestellt werden. So kann z.B. (vgl. Fig. 2) ein sich im wesentlichen horizontal ausdehnender Lichtstrahl 23 bzw. eine Lichtschranke einer Kontrollvorrichtung 22 schräg durch die Magazine 7',9' gerichtet werden, falls die Kontrollöffnung 21 für diesen Lichtstrahl 23 durchlässig ist. Die Ablenkung, Streuung oder Abschwächung des Lichtstrahls 23 durch ein in einem Lagerplatz 6 anwesender Objektträger 8,10 kann einfach mit einem lichtempfindlichen Sensor festgestellt werden. Während in Figur 2 eine Kontrollöffnung 21 in Form einer "abgeschnittenen Ecke" gezeigt ist, kann der Lichtstrahl 23 auch durch die Einschubseite 15 in die Magazine 7',9' gesendet werden und auf der entgegengesetzten, nicht abgeschnittenen Seite auf einen Sensor auftreffen; eine schräge Ausrichtung gegenüber der Transportrichtung der Objektträger 8,10 und/oder das Anbringen eines Umlenkspiegels (beides nicht gezeigt) ermöglichen ebenfalls eine Detektion der Objektträger in ihren Magazinen selbst bei angenähertem Probentisch 2.

Weitere Varianten zum Feststellen der An- oder Abwesenheit eines Objektträgers in einer bestimmten Lagerstelle 6 eines der beiden Magazine 7',9' beruhen beispielsweise auf der Basis eines kapazitiven Näherungsnachweises.

Bevorzugt umfasst die Transportvorrichtung 3 des Laser Scanner-Geräts 1 einen Entladeschieber 31, der im wesentlichen parallel zu der Probenebene 49 durch die der Einschubseite 15 der Magazine 7',9' gegenüberliegende Seite eingreifend und zum Transportieren eines Proben-Objektträgers 8 oder eines Test-Objektträgers 10 aus seiner Lagerstelle 6 und aus der Einschubseite 15 heraus zum Probentisch 2 ausgebildet ist. Diese Transportvorrichtung 3 umfasst vorzugsweise zudem einen Ladeschieber 32, der zum Transportieren eines Proben-Objektträgers 8 oder eines Test-Objektträgers 10 aus dem Probentisch 2 und durch die Einschubseite 15 hinein zu einem Lagerplatz 6 in einem der Magazine 7',9' ausgebildet ist. Besonders bevorzugt wird, dass Ladeschieber 32 eine schwenkbare Klappe 33 umfasst, welche hochgeschwenkt werden und so über den im Probentisch 2 eingesetzten Objektträger 8,10 wegbewegt werden kann, ohne dass diese Klappe 33, welche um eine Achse 47 kippbar ist, den Objektträger berührt. So kann diese Klappe über den Objektträger 8,10 bewegt und hinter diesem abgesenkt werden, worauf der Objektträger von der Klappe 33 erfasst und aus dem Probentisch 2 gezogen werden kann.

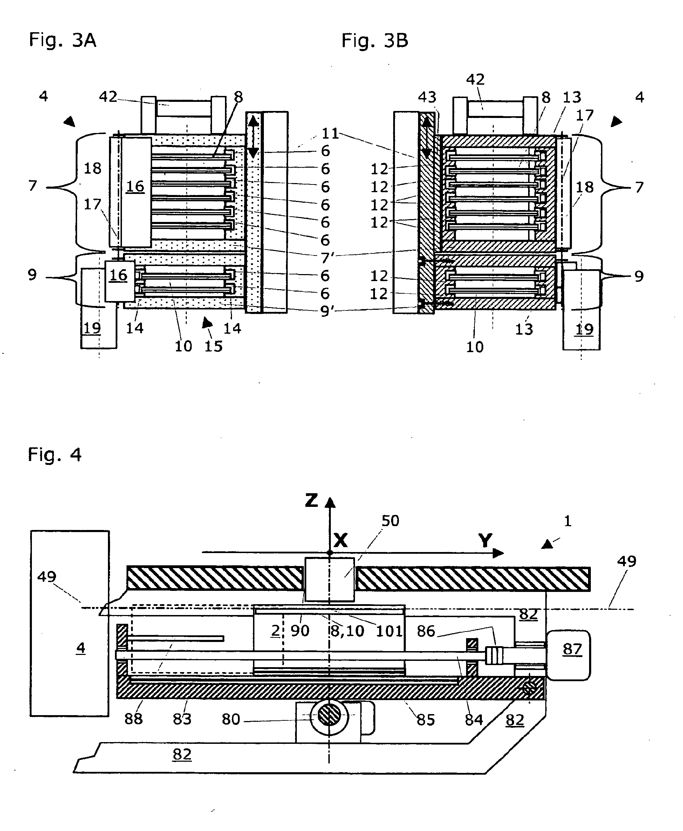

Figur 3 zeigt vertikale Ansichten der Objektträgermagazine mit geöffnetem Testobjekt-Magazin. Die Figur 3A zeigt dabei die Einschubseite der beiden Objektträgermagazine in einer Frontansicht vom Objekttisch her gesehen. Die vertikal bewegliche Stellplatte 11 ist auf der rechten Seite sichtbar und ihre Beweglichkeit mit einem Doppelpfeil markiert. Der Probenteil 7 ist gerade über dem Testteil 9 angeordnet, wobei das Probenteil-Magazin 7' mit hier acht in den Lagerstellen 6 ruhenden Proben-Objektträgern 8 axial über dem Testteil-Magazin 9' mit hier zwei Test-Objektträgern 10 befestigt ist. Die wegschwenkbare Klappe 16 des Probenteil-Magazins 7' ist geschlossen, währenddem die wegschwenkbare Klappe 16 des Testteil-Magazins 9' geöffnet ist und im wesentlichen die ganze Breite der Einschubseite des Testteil-Magazins 9' frei gibt. Das Wegschwenken der wegschwenkbaren Klappe 16 des Testteil-Magazins 9' wird hier durch die Exzenterwalze 19 bewerkstelligt, welche auf die Winkelplatte 18 dieser Klappe drückt. Die Exzenterwalze 19 wird bevorzugt zumindest nahe der durch den Probentisch 2 definierten Probenebene 49 angeordnet, so dass trotz dem Verschieben der Aufbewahrungseinheit 4 in der Höhe immer die richtige Klappe 16 weggeschwenkt wird. Die Anpressfedern des Testteil-Magazins 9' sind gut zu sehen, wie sie federnd auf die eine Seitenkante 14 der Test-Objektträger 10 drücken.

Die Figur 3B zeigt die beiden gleichen Objektträgermagazine im Vertikalschnitt mit Blick gegen den Objekttisch hin. Die vertikal bewegliche Stellplatte 11 ist auf der linken Seite sichtbar und ihre Beweglichkeit mit einem Doppelpfeil markiert. Das Probenteil-Magazin 7' ist über den Schwalbenschwanz 43 der Stellplatte 11 geschoben und wird hier vom Testteil-Magazin 9' in einer konstanten Position an der Stellplatte 11 gehalten. Das Testteil-Magazin 9' ist hier mit der Stellplatte 11 fest verschraubt. Die Anpressfedern 13 des Probenteil-Magazins 7' und des Testteil-Magazins 9' sind hier gut auf der rechten Seite der Objektträgerstapel zu sehen.

Figur 4 zeigt einen vertikalen Teilschnitt durch den Objekttisch sowie dessen Höhenverstellung und Längsneigevorrichtung. Die durch den Probentisch 2 definierte Probenebene 49 ist in im wesentlichen der Z-Richtung (hier in der Vertikalen) verstellbar, indem der an einer Aufhängung 83 linear befestigte und linear verschiebbare Probentisch zusammen mit dieser Aufhängung 83 auf einem motorisch angetriebenen Exzenter 80 aufliegt und schwenkbar an einem Rahmen 82 einseitig befestigt ist. Wird der Exzenter 80 etwas gedreht, so hebt oder senkt sich entsprechend die Aufhängung 83 mit dem Probentisch 2. Mit dieser Bewegung kann die Ebene 49 des Probentischs 2 mit der Ebene einer Lagerstelle 6 im Probenteil-Magazin 7' oder im Testteil-Magazin 9' der Aufbewahrungseinheit 4 in Übereinstimmung gebracht werden, so dass ein linearer Transfer zwischen einem dieser Magazine 7',9' und dem Probentische erfolgen kann. Vorzugsweise wird das entsprechende Magazin in der Z-Richtung durch eine Verschiebung der beweglichen Stellplatte 11 bereitgestellt, so dass nur eine allfällige Feinabstimmung mit dem Exzenter 80 der Probentischaufhängung 83 erfolgen muss.

Zum Zweck eines solchen Objektträgertransfers wird der Probentisch 2 vorzugsweise möglichst weit der Aufbewahrungseinheit 4 in der im wesentlichen horizontalen Y-Richtung angenähert. Beim Annähern des Probentischs 2 an die Aufbewahrungseinheit 4 dringt ein Senkdorn 88 in den Probentisch 2 ein und senkt dadurch eine Auflage der Aufnahme 34 des Probentischs 2 zum Aufnehmen eines Objektträgers ab. Dadurch wird der Probentisch 2 zur Aufnahme eines Objektträgers 8,10 bereit gestellt. Diese Annäherung geschieht bevorzugt mittels eines an der Aufhängung 83 gelagerten Spindeltriebes 84 und entlang einer Linearführung 85. Der Spindeltrieb 84 ist über eine flexible Kupplung 86 mit dem Motor 87 verbunden, so dass eine exakte Linearführung des Probentischs 2 in im wesentlichen der Y-Richtung auch dann erfolgen kann, wenn die Probenebene 49 einen geringen Neigungswinkel zur Horizontalen einschliesst. Ziel der Verstellbarkeit des Probentischs 2 mit dem Exzenter 80 ist hauptsächlich das Ausrichten der Probenebene 49 zu einer Fokallinie 101, die durch einen in der X-Richtung (hier senkrecht zur Zeichnungsebene) schwingenden Scanner-Kopf 50 des Laser Scanner-Geräts 1 definiert wird. Dieser Scanner-Kopf 50 bewegt sich sehr schnell in der X-Richtung und auf der Oberseite einer Trennplatte 99. Diese Trennplatte weist eine Rasteröffnung 90 auf. Bevorzugt ist der Scanner-Kopf 50 in diese Rasteröffnung 90 eingesenkt, so dass die von ihm ausgehenden Lichtstrahlen die Probe in geringem Abstand treffen, und dass der Scanner-Kopf 50 die von der Probe kommenden Fluoreszenzemission so effektiv wie möglich aufnehmen und an einen Detektor 61 oder an mehrere Detektoren 61 weiter leiten kann.

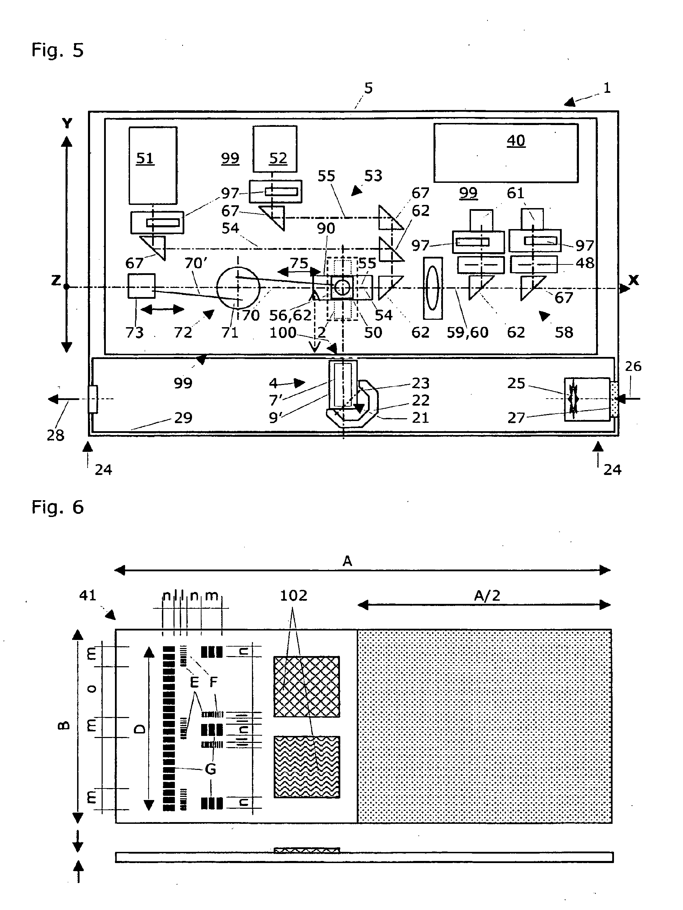

Figur 5 zeigt einen horizontalen Teilschnitt durch ein Laser Scanner-Gerät 1 mit wesentlichen optischen Elementen eines ersten optischen Systems 53 zum Bereistellen von Anregungslicht und eines zweiten optischen Systems 58 zum Erfassen der ausgelösten Fluoreszenzemission der Proben, mit einer Scanner-Einrichtung 72, mit einem Objekttisch 2 und mit einer Aufbewahrungseinheit 4. Bevorzugt sind alle wesentlichen optischen Elemente und die Scanner-Einrichtung 72 auf einer gemeinsamen Trennplatte 99 und der Probentisch 2 unterhalb dieser Trennplatte 99 (vgl. Fig. 4) angeordnet.

Die wesentlichen optischen Elemente des ersten optischen Systems 53 sind in einem Gehäuse 5 angeordnet und umfassen zumindest einen ersten Laser 51 und optional einen zweiten Laser 52, Filterräder 97 für die von dem oder den Lasern 51,52 ausgehenden Laserstrahlen 54,55 sowie eine Anzahl Dichroidspiegel 62 und einfacher Spiegel 67 zum Umlenken der Laserstrahlen 54,55 aus den Lasern 51,52 in eine zur X-Richtung parallelen Richtung.

Die wesentlichen optischen Elemente des zweiten optischen Systems 58 sind im gleichen Gehäuse 5 angeordnet und umfassen einen oder mehrere Detektoren 61, diesen vorgeordnete Filterräder 97 und Blenden 48 für die von den Proben ausgehenden Emissionsstrahlenbündel 59,60 sowie eine Anzahl Dichroidspiegel 62 und einfacher Spiegel 67 zum Umlenken der Emissionsstrahlenbündel 59,60 aus einer zur X-Richtung parallelen Richtung in Richtung der Detektoren 61.

Die Scanner-Einrichtung 72 umfasst einen Antrieb 71, den Scanner-Kopf 50 und vorzugsweise einen Gegenschwinger 73 mit einer dem Scanner-Kopf 50 gleichen oder zumindest äquivalenten Masse zur Impulskompensation. Scanner-Kopf und Gegenschwinger sind mittels Pleuelstangen 70,70' mit dem Antrieb 71 verbunden und an je einer präzisen Linearführung (nicht gezeigt) befestigt. Durch den Antrieb 71 wird der Scanner-Kopf 50 in eine schnelle hin und her Bewegung in einer Bewegungsrichtung (vgl. ausgefüllte Doppelpfeile) gebracht, welche gleichzeitig die Scan-Achse 75 definiert. Dabei führt der Gegenschwinger 73 immer eine entgegengesetzte Bewegung aus, wodurch es geling, die Trennplatte 99 und damit das ganze Laser Scanner-Gerät 1 trotz der bevorzugt hohen Rastergeschwindigkeit des Scanner-Kopfes 50 ruhig zu halten. Die Scan-Achse 75 ist parallel zur X-Achse oder fällt gerade mit dieser zusammen. Der Scanner-Kopf 50 umfasst ein optisches Umlenkelement 56, welches z.B. als Dichroidspiegel 62 ausgebildet ist. Dieses Umlenkelement 56 kann als Vollspiegel, Prisma, Pentaprisma, Pentaspiegel-Konfiguration oder als Kombination aus diesen hier aufgeführten Elementen ausgebildet sein. Dieses Umlenkelement 56 lenkt einerseits die Laserstrahlen 54,55 des ersten optischen Systems 53 auf die Proben auf dem Probentisch 2 und andererseits die von den Proben ausgesandten Emissionsstrahlenbündel 59,60 in Richtung des zweiten optischen Systems 58.

Senkrecht zur X-Achse und Scan-Achse 75 verläuft die Bewegungsrichtung des unterhalb der Trennplatte 99 angeordneten Probentischs 2 in Richtung der Y-Achse. Vorzugsweise in einem Bereich ausserhalb der Trennplatte 99 ist die Aufbewahrungseinheit 4 mit den in einem Probenteil-Magazin 7' gelagerten Proben-Objektträgern 8 und den in einem Testteil-Magazin 9' gelagerten Test-Objektträgern 10 angeordnet. Die Anwesenheit eines Objektträgers 8,10 in einer bestimmten Lagerstelle 6 dieser Magazine 7',9' wird bevorzugt mittels einer Kontrollvorrichtung 22 überprüft. Diese Kontrollvorrichtung umfasst vorzugsweise einen Lichtstrahl 23, der zu diesen Kontrollzwecken eine Kontrollöffnung 21 durchdringt.

Vorzugsweise weist das Laser Scanner-Gerät 1 eine Lüftungseinrichtung 24 mit einem Ventilator 25, einem Lufteinlass 26 mit einem Aktivkohlefilter 27 und einem Luftauslass 28 auf, um die Exposition der Fluoreszenzfarbstoffe an oder in den im Probenteil-Magazin 7' gelagerten Proben gegenüber Ozon zu reduzieren. Besonders bevorzugt umfasst die Lüftungseinrichtung 24 ein zusätzliches Gehäuse 29, welches den Probenteil 7 mit den Proben-Objektträgern 8 im wesentlichen umschliesst. Dieses zusätzliche Gehäuse 29 ist bevorzugt innerhalb des Gehäuses 5 des Laser Scanner-Geräts 1 angeordnet und als wegschwenkbarer, zumindest im wesentlichen abgeschlossener Bereich ausgebildet. Dabei wird besonders bevorzugt, dass die Lüftungseinrichtung 24 in diesem zusätzlichen Gehäuse 29 untergebracht und von der Lüftung des Laser Scanner-Geräts 1 unabhängig ist.

Ein Service-Fachmann kann beispielsweise dieses zusätzliche Gehäuse 29 öffnen und wenn nötig einen oder mehrere Testobjektträger im sonst unzugänglichen Teststeil-Magazin 9' einsetzen oder ersetzen. Bevorzugt ist dieses zusätzliche Gehäuse 29 von der Trennplatte 99 wegschwenkbar ausgebildet und weist eine Ladeöffnung 100 auf, durch welche jeweils ein Objektträger 8,10 auf den Probentisch 2 oder in ein Magazin 7',9' hinein transportiert werden kann. Vorzugsweise ist der Probenteil 7 axial über dem Testteil 9 der Aufbewahrungseinheit 4 angeordnet und wird zusammen mit dem zusätzlichen Gehäuse 29 oder zumindest zusammen mit einem Teil dieses zusätzlichen Gehäuses (das damit für den Service Fachmann geöffnet wird) weggeschwenkt.

Besonders bevorzugt wird, dass ein Service Fachmann einen oder mehrere Test-Objektträger 10 individuell in ein Probenteil-Magazin 7' einschiebt und dieses Probenteil-Magazin 7' auf dem ordentlichen Wege in das Laser Scanner-Gerät 1 einsetzt. Eine entsprechend programmierte Firmware in der Steuerung 40 des Laser Scanner-Geräts 1 wird dann vorzugsweise per Eingabe einer persönlichen Identifikationsnummer (PIN) des Service Fachmanns bzw. per Eingabe eines Codes für die Service-Fachleute aktiviert. Die so aktivierte Firmware befähigt die Steuerung 40 des Laser Scanner-Geräts 1, den automatischen Transport jedes dieser Test-Objektträger 10 aus dem Probenteil-Magazin 7' auf den Probentisch 2 und weiter in eine Lagerstelle 6 des Teststeil-Magazins 9' zu steuern. Gemäss diesem besonders bevorzugten Verfahren wird jeder manuelle Eingriff in das Testteil-Magazin 9' verunmöglicht. Nur in besonderen Notfällen könnte ein Service-Fachmann mit geeigneten Werkzeugen die vorzugsweise in dem zusätzlichen Gehäuse 29 eingeschlossenen Test-Objektträger 10 herausholen. Vorzugsweise ist die Steuerung 40 des erfindungsgemässen Laser Scanner-Geräts 1 zum Steuern einer automatisierten, internen und an Hand von Test-Objektträgern 10 ausgeführten Instrumentprüfung ausgebildet.

Vorzugsweise ist der Probentisch 2 zum Verfahren bis unmittelbar vor die Aufbewahrungseinheit 4 motorisch angetrieben ausgebildet und dessen Lage und Bewegung durch die Steuerung 40 kontrolliert. Das selbe gilt auch für die Stellplatte 11 der Aufbewahrungseinheit 4 zum Auswählen des zu untersuchenden Objektträgers 8,10 und für die drehbare Exzenterwalze 19 zum Wegschwenken der Klappen 16. Zudem wird bevorzugt, dass auch der Entladeschieber 31 zum Transportieren eines Objektträgers 8,10 zu dem Probentisch 2 für das automatisierte Auswählen und Bereitstellen eines Proben-Objektträgers 8 oder Test-Objektträgers 10 auf dem Probentisch 2 motorisch angetrieben ausgebildet und dessen Lage und Bewegung durch die Steuerung 40 kontrolliert sind. Das selbe gilt auch für den Ladeschieber 32 zum Transportieren eines Objektträgers 8,10 zu der Aufbewahrungseinheit 4 beim Zurücklegen derselben in eine Lagerstelle 6 des Probenteil-Magazins 7' oder des Testteil-Magazins 9'.

Die Figur 6 zeigt einen Test-Objektträger 10, der das Format eines Standardobjektträgers für die Lichtmikroskopie aufweist und der ausschliesslich im wesentlichen lichtstabile Teststrukturen 41 umfasst. Als "im wesentlichen lichtstabil" wird eine Teststruktur bezeichnet, wenn diese bei normaler Benutzung, d.h. bei der während Testverfahren üblicherweise auftretenden Strahlenbelastung keinen messbaren Schaden erleidet. Eine minutenlange oder gar stundenlange Bestrahlung eines Test-Objektträgers 10 mit einem Laserstrahl 54,55 wird nicht als "normale Benutzung" bezeichnet.

Die folgende Tabelle 1 gibt einen Überblick über die gebräuchlichsten Glasobjektträger für die Lichtmikroskopie:

| **Typ** | **Inch: 1 x 3 Zoll** | **Metrisch: 25 x 75 mm** |
|---|---|---|
| Dimensionen: | | |
| Länge x Breite | 76.2 mm x 25.4 mm | 76 mm x 25 mm |
| (Toleranzen) | (± 0.5 mm) | (± 0.5 mm) |

| Dicke: | | |
|---|---|---|
| "standard" | 1.02 mm (± 0.05 mm) | |
| "dick" | 1.2 mm (± 0.1 mm) | 1.02 mm (± 0.05 mm) |

| Behandlung: | | |
|---|---|---|
| Ecken | scharf, gefast | scharf, gefast |
| Kanten | scharf, gefast | scharf, gefast |
| Oberflächen | blank, sandgestrahlt, auf einer oder beiden Seiten | blank, sandgestrahlt, auf einer oder beiden Seiten |

Der in der Figur 6 abgebildete, beispielhafte Test-Objektträger 10 weist eine Fläche mit einer Länge A von 75 mm einer Breite B von 25 mm sowie eine Dicke C von 1 mm auf. Die eine Hälfte der Fläche A/2 ist (beispielsweise mittels Schleifen) mattiert. Die andere Hälfte weist ein bevorzugtes Linien-Muster mit einer Breite D von 20 mm auf.

Dieses Linienmuster besteht bevorzugt aus einer mittels Maske erstellten, aufgedampften Chromschicht. Die Grossbuchstaben E, F, G bezeichnen eine bestimmte Anzahl Linienpaare pro Millimeter (Ip/mm) und die Kleinbuchstaben l, m, n, o bezeichnen bestimmte Masse wie folgt:
E = 50 lp/mm; F = 100 lp/mm; G = 10 lp/mm;
l = 0.5 mm; m = 2 mm; n = 1 mm; o = 7 mm.

Alle diese Teststrukturen 41 sind bevorzugt ausschliesslich im wesentlichen lichtstabil und nicht fluoreszierend.

Das erfindungsgemässe Laser Scanner-Gerät 1 ist zur Abbildung und Vermessung von zweidimensionalen Objekten ausgelegt. Dementsprechend muss eine Empfindlichkeitskalibrierung genau für diese "flachen" Objekte gültig sein. Zweidimensionale Fluoreszenzproben, die sowohl lichtstabil als auch chemisch über lange Zeiträume beständig sind, sind jedoch nicht oder nur sehr schwer herzustellen.

Dagegen können Objekte, die eine dreidimensionale Ausdehnung haben, vermessen werden. Weil die an solchen dreidimensionalen Objekten gemessenen Intensitäten aber stark von der Tiefenschärfe des Laser Scanner-Geräts und von der jeweiligen Positionierung im Fokus (d.h. in der Z-Richtung) abhängen, sind solche dreidimensionalen Objekte nicht direkt zur Kalibrierung von Signalintensität oder Empfindlichkeit geeignet. Als sogenanntes "Bulk-Material" existieren jedoch Materialien 102, wie beispielsweise in Kunststoff eingebettete Fluoreszenzfarbstoffe oder dotierte Gläser, die weitestgehend lichtstabil und chemisch beständig sind.

Die Ausrichtung des Probentischs 2 und der Aufbewahrungseinheit des Laser Scanner-Geräts 1 im Raum ist eigentlich beliebig. Dasselbe gilt für die gut ausgewuchtete bzw. mittels Gegenschwinger 73 impulskompensierte Scanner-Einrichtung 72. Auch kann die Probenebene 49 des Probentisches 2 im wesentlichen horizontal aber kopfüber hängend angeordnet sein. Allerdings wird eine stehende Anordnung des Probentischs gemäss den Figuren 1 und 2 bzw. 4 und 5 bevorzugt.

Gleiche Merkmale oder Elemente des erfindungsgemässen Laser Scanner-Geräts 1 sind jeweils mit gleichen Bezugszeichen versehen, wenngleich diese Elemente nicht in allen Fällen im Detail beschrieben sind.

Zudem wird ein erfindungsgemässes Verfahren zum Betrieb eines solchen Laser Scanner-Geräts 1 zum Abbilden und/oder Vermessen von auf Objektträgern befindlichen, mit Fluoreszenzfarbstoffen behandelten, fluoreszierenden Proben offenbart. Dieses Verfahren ist dadurch gekennzeichnet, dass der Testteil 9 vom Probenteil 7 getrennt und als mit dem Laser Scanner-Gerät 1 fest verbundenes Testteil-Magazin 9' für einen oder mehrere Test-Objektträger 10 ausgebildet ist, wobei zumindest eine Lagerstelle 6 für Test-Objektträger 10 zum Durchführen einer Instrumentprüfung bereitgestellt wird, welche im Betriebszustand des Laser Scanner-Geräts 1 für eine Bedienungsperson manuell nicht zugänglich ist.

Besonders bevorzugt ist eine Instrumentprüfung, die ausgewählt ist aus einer Gruppe, die das Durchführen von Intensitäts- und Empfindlichkeitstests, von Cross-Talk-, Auflösungs- und Dynamik-Messungen, von Laser-Rausch- und -Intensitätsmessungen und von Filter-Blockungs- und Filter-Transmissionsprüfungen sowie das Überprüfen der Justage von optischen Komponenten, der geometrischen Bildparameter und der Bildausrichtung umfasst. Geometrische Bildparameter sind z.B. der Abbildungsmassstab sowie das Feststellen und parametrisieren von Verzeichnungen. Auch Überlagerungen von zwei oder mehr Anregungskanälen und/oder Detektionskanälen können überprüft werden. Des weiteren ist das Laser Scanner-Gerät 1 zur Kontrolle der Autofokusfunktion befähigt.

Bevorzugt wird eine Empfindlichkeitsprüfung ohne fluoreszierende Substanz durchgeführt und zwar mit zumindest einem Test-Objektträger 10, der zumindest annähernd das Format eines Standardobjektträgers für die Lichtmikroskopie aufweist und der ausschliesslich im wesentlichen lichtstabile Teststrukturen 41 umfasst.

Alternativ oder ergänzend zu der eben erwähnten Empfindlichkeitsprüfung an im wesentlichen zweidimensionalen Teststrukturen 41 ohne fluoreszierende Substanz kann auch eine Intensitätsmessung an dreidimensionalen, fluoreszierenden Teststrukturen durchgeführt werden:

An der Stelle eines normalen Scans bzw. eines normalen abgerasterten Feldes in XY-Richtung und damit parallel zur Probenebene 49 wird ein Scan in XZ-Richtung (Z-Profil) durchgeführt, indem ein Feld abgerastert wird, welches zumindest im wesentlichen senkrecht auf der Probenebene 49 steht. Das direkt gemessene Z-Profil stellt die gemessene Intensität in Abhängigkeit von der Z-Koordinate dar (I=I(Z)). An der Stelle dieses Z-Profils wird nun vorzugsweise die erste Ableitung der entsprechenden Intensitäten (dI=dI(z)/dz) berechnet, womit wieder eine zweidimensionale Intensitätsverteilung vorliegt. Das Maximum der ersten Ableitung ist somit ein Mass für die vom Laser Scanner-Gerät 1 an der Oberfläche der Probe gemessenen Intensität.

Die für dieses Kalibrierverfahren geeigneten Materialien 102 können zusammen mit den aufgedampften Linienmustern auf dem gleichen Test-Objektträger 10 oder auf einem separaten Test-Objektträger angeordnet werden. Diese flachen, dreidimensionalen Materialien 102 weisen bevorzugt eine zur Probenebene 49 parallele Ausdehnung von 2 x 2 mm bis 10 x 10 mm auf und haben eine Dicke von etwa 0.1 bis 2 mm, bevorzugt eine Dicke von ca. 1mm (vgl. Fig. 6).

### Bezugszeichen:

| | | | |
|---|---|---|---|
| 1 | Laser Scanner-Gerät | 7' | Probenteil-Magazin |
| 2 | Probentisch | 8 | Proben-Objektträger |
| 3 | Transportvorrichtung | 9 | Testteil |
| 4 | Aufbewahrungseinheit | 9' | Testteil-Magazin |
| 5 | Gehäuse | 10 | Test-Objektträger |
| 6 | Lagerstelle | 11 | bewegliche Stellplatte |
| 7 | Probenteil | 12 | Lagerstege |
| 13 | Anpressfeder | 52 | zweiter Laser |
| 14 | Längskante Objektträger | 53 | erstes optisches System |
| 15 | Einschubseite | 54 | erster Laserstrahl |
| 16 | wegschwenkbare Klappe | 55 | zweiter Laserstrahl |
| 17 | Achse | 56 | optisches Umlenkelement |
| 18 | Winkelplatte | 58 | zweites optisches System |
| 19 | Exzenterwalze | 59 | Emissionsstrahlenbündel |
| 20 | Sperrplatte | 60 | Emissionsstrahlenbündel |
| 21 | Kontrollöffnung | 61 | Detektor |
| 22 | Kontrollvorrichtung | 62 | Dichroidspiegel |
| 23 | Lichtstrahl | 67 | einfacher Spiegel |
| 24 | Lüftungseinrichtung | 70,70' | Pleuel |
| 25 | Ventilator | 71 | Antrieb |
| 26 | Lufteinlass | 72 | Scanner-Einrichtung |
| 27 | Aktivkohlefilter | 73 | Gegenschwinger |
| 28 | Luftauslass | 75 | Bewegungsrichtung, Scan-Achse |
| 29 | zusätzliches Gehäuse | 80 | motorisierter Exzenter |
| 31 | Entladeschieber | 82 | Rahmen |
| 32 | Ladeschieber | 83 | Aufhängung |
| 33 | schwenkbare Klappe | 84 | Spindeltrieb |
| 34 | Aufnahme | 85 | Linearführung |
| 39 | bewegliche Anpressteile | 86 | Kupplung |
| 40 | Steuerung | 87 | Motor |
| 41 | Teststrukturen | 88 | Senkdorn |
| 42 | Handgriff | 90 | Rasteröffnung |
| 43 | Schwalbenschwanz | 97 | Filterrad |
| 47 | Kippachse von 33 | 99 | Trennplatte |
| 48 | Blende | 100 | Ladeöffnung |
| 49 | Ebene, Probenebene | 101 | Fokallinie |
| 50 | Scanner-Kopf | 102 | flache Materialien |
| 51 | erster Laser | | |

## Patentansprüche

1. Laser Scanner-Gerät (1) zum Abbilden oder Vermessen von auf Objektträgern befindlichen, mit Fluoreszenzfarbstoffen behandelten, fluoreszierenden Proben, wobei das Laser Scanner-Gerät (1) umfasst:
- ein Gehäuse (5);
- einen eine Probenebene (49) definierenden Probentisch (2);
- eine Aufbewahrungseinheit (4); und
- eine motorisierte Transportvorrichtung (3) zum Bewegen eines Objektträgers von der Aufbewahrungseinheit (4) zum Probentisch (2) und zurück,
wobei die Aufbewahrungseinheit (4) einen Probenteil (7) für Proben-Objektträger (8) und einen Testteil (9) für Testobjektträger (10) umfasst, und wobei der Probenteil (7) und der Testteil (9) mindestens je eine Lagerstelle (6) aufweisen, die während des Betriebs des Laser Scanner-Geräts (1) für die Transportvorrichtung (3) zugänglich sind, **dadurch gekennzeichnet, dass**:
- der Testteil (9) vom Probenteil (7) getrennt und als mit dem Laser Scanner-Gerät (1) fest verbundenes Testteil-Magazin (9') für einen oder mehrere Test-Objektträger (10) ausgebildet ist, wobei der Testteil (9) mit einer in Bezug auf den Probentisch (2) des Laser Scanner-Geräts (1) beweglichen Stellplatte (11) der Aufbewahrungseinheit (4) fest verbunden ist, wodurch ein im Testteil (9) aufbewahrter Test-Objektträger (10) im Betriebszustand des Laser Scanner-Geräts (1) für eine Bedienungsperson manuell nicht zugänglich ist;
- der Probenteil (7) axial über dem Testteil (9) angeordnet ist und reversibel an der Stellplatte (11) der Aufbewahrungseinheit (4) montierbar ist, wobei der Probenteil (7) als von aussen in das Gehäuse (5) des Laser Scanner-Geräts (1) einsetzbares Probenteil-Magazin (7') für eine Vielzahl von Proben-Objektträgern (8) ausgebildet ist, das über eine steckbare Verbindung mit der beweglichen Stellplatte (11) verbunden ist;
- die Stellplatte (11) im wesentlichen senkrecht gegenüber der Probenebene (49) des Probentischs (2) verschiebbar ist, so dass ein beliebiger Objektträger (8,10) auf das Niveau der vom Probentisch (2) definierten Probenebene (49) gebracht und zu einem linearen Transport auf den Probentisch (2) bereitgestellt werden kann.

2. Laser Scanner-Gerät (1) gemäss Anspruch 1, **dadurch gekennzeichnet, dass** das fest mit der Stellplatte (11) der Aufbewahrungseinheit (4) verbundene Testteil-Magazin (9') einen unteren Anschlag für das eingeschobene Probenteil-Magazin (7') darstellt.

3. Laser Scanner-Gerät gemäss Anspruch 1, **dadurch gekennzeichnet, dass** die Lagerstellen (6) im Probenteil-Magazin (7') und/oder im Testteil-Magazin (9') zur Aufnahme von Objektträgern ausgebildet sind, welche im wesentlichen die Abmessungen eines Standardobjektträgers für die Lichtmikroskopie aufweisen, wobei diese Lagerstellen (6) voneinander durch Lagerstege (12) getrennt sind.

4. Laser Scanner-Gerät gemäss Anspruch 3, **dadurch gekennzeichnet, dass** jede dieser Lagerstellen (6) eine Anpressfeder (13) umfasst, welche elastisch eine Längskante (14) eines eingesetzten Objektträgers beaufschlägt.

5. Laser Scanner-Gerät gemäss einem der Ansprüche 3 oder 4, **dadurch gekennzeichnet, dass** das Probenteil-Magazin (7') und/oder das Testteil-Magazin (9') je eine offene Einschubseite (15) umfassen, welche jeweils in ihrer Breite zumindest teilweise von je einer, sich im wesentlichen über die ganze Stapelhöhe des jeweiligen Magazins (7',9') erstreckenden, wegschwenkbaren Klappe (16) abdeckbar ist.

6. Laser Scanner-Gerät gemäss Anspruch 5, **dadurch gekennzeichnet, dass** die wegschwenkbaren Klappen (16) um je eine seitlich der Magazine (7',9') angeordnete Achse (17) drehbar befestigt sind und je eine Winkelplatte (18) umfassen, die sich im wesentlichen über die ganze Stapelhöhe der Magazine (7',9') erstreckt.

7. Laser Scanner-Gerät gemäss einem der Ansprüche 5 oder 6, **dadurch gekennzeichnet, dass** zumindest das Probenteil-Magazin (7') auf seiner der Einschubseite (15) gegenüber liegenden Seite eine sich im wesentlichen über die ganze Stapelhöhe erstreckende Sperrplatte (20) umfasst, welche einen Teil der Breite dieser Seite abdeckt.

8. Laser Scanner-Gerät gemäss einem der Ansprüche 5 bis 7, **dadurch gekennzeichnet, dass** zumindest das Probenteil-Magazin (7') eine oder mehrere Kontrollöffnungen (21) zum Feststellen der An- oder Abwesenheit eines Objektträgers in einer bestimmten Lagerstelle (6) in zumindest einem der Magazine (7',9') umfasst.

9. Laser Scanner-Gerät gemäss einem der Ansprüche 1 bis 8, **dadurch gekennzeichnet, dass** es eine Lüftungseinrichtung (24) mit einem Ventilator (25), einem Lufteinlass (26) mit einem Aktivkohlefilter (27) und einem Luftauslass (28) umfasst, um die Exposition der Fluoreszenzfarbstoffe an oder in den im Probenteil-Magazin (7') gelagerten Proben gegenüber Ozon zu reduzieren.

10. Laser Scanner-Gerät gemäss Anspruch 9, **dadurch gekennzeichnet, dass** die Lüftungseinrichtung (24) ein zusätzliches Gehäuse (29) umfasst, welches den Probenteil (7) mit den Proben-Objektträgern (8) im wesentlichen umschliesst.

11. Laser Scanner-Gerät gemäss einem der Ansprüche 5 bis 10, **dadurch gekennzeichnet, dass** die Transportvorrichtung (3) einen Entladeschieber (31) umfasst, der im wesentlichen parallel zu der Probenebene (49) durch die der Einschubseite (15) der Magazine (7',9') gegenüberliegende Seite eingreifend und zum Transportieren eines Proben-Objektträgers (8) oder eines Test-Objektträgers (10) aus seiner Lagerstelle (6) und aus der Einschubseite (15) heraus zum Probentisch (2) ausgebildet ist.

12. Laser Scanner-Gerät gemäss einem der Ansprüche 5 bis 11, **dadurch gekennzeichnet, dass** die Transportvorrichtung (3) einen Ladeschieber (32) umfasst, der zum Transportieren eines Proben-Objektträgers (8) oder eines Test-Objektträgers (10) aus dem Probentisch (2) und durch die Einschubseite (15) hinein zu einem Lagerplatz (6) in einem der Magazine (7',9') ausgebildet ist.

13. Laser Scanner-Gerät gemäss einem der vorhergehenden Ansprüche, **dadurch gekennzeichnet, dass** der Probentisch (2) zum Transfer von Proben-Objektträgern (8) oder Test-Objektträgern (10) bis unmittelbar vor die Aufbewahrungseinheit (4) verfahrbar ausgebildet ist.

14. Laser Scanner-Gerät gemäss einem der vorhergehenden Ansprüche, **dadurch gekennzeichnet, dass** es eine Steuerung (40) umfasst, die zum Steuern einer automatisierten, internen und an Hand von Test-Objektträgern (10) ausgeführten Instrumentprüfung ausgebildet ist.

15. Laser Scanner-Gerät gemäss einem der vorhergehenden Ansprüche, **dadurch gekennzeichnet, dass** es zumindest einen Test-Objektträger (10) umfasst, der das Format eines Standardobjektträgers für die Lichtmikroskopie aufweist und der ausschliesslich im wesentlichen lichtstabile Teststrukturen (41) umfasst.

16. Laser Scanner-Gerät gemäss Anspruch 15, **dadurch gekennzeichnet, dass** die Teststrukturen (41) ausgewählt sind aus eine Gruppe, die im wesentlichen zweidimensionale Linienmuster und flache, dreidimensionale Materialien (102) umfasst.

17. Laser Scanner-Gerät gemäss einem der vorhergehenden Ansprüche, **dadurch gekennzeichnet, dass** die Probenebene (49) des Probentisches (2) im wesentlichen horizontal angeordnet ist.

18. Verfahren zum Betrieb eines Laser Scanner-Geräts zum Abbilden und/oder Vermessen von auf Objektträgern befindlichen, mit Fluoreszenzfarbstoffen behandelten, fluoreszierenden Proben, **dadurch gekennzeichnet, dass** ein Laser Scanner-Gerät (1) gemäss Anspruch 1 bereitgestellt wird, wobei zumindest eine Lagerstelle (6) für Test-Objektträger (10) zum Durchführen einer Instrumentprüfung bereitgestellt wird, welche im Betriebszustand des Laser Scanner-Geräts (1) für eine Bedienungsperson manuell nicht zugänglich ist.

19. Verfahren gemäss Anspruch 18, **dadurch gekennzeichnet, dass** die Instrumentprüfung ausgewählt ist aus einer Gruppe, die das Durchführen von Intensitäts- und Empfindlichkeitstests, von Cross-Talk-, Auflösungs- und Dynamik-Messungen, von Laser-Rausch- und -Intensitätsmessungen und von Filter-Blockungs- und Filter-Transmissionsprüfungen sowie das Überprüfen der Justage von optischen Komponenten, der geometrischen Bildparameter und der Bildausrichtung umfasst.

20. Verfahren gemäss Anspruch 18 oder 19, **dadurch gekennzeichnet, dass** eine Empfindlichkeitsprüfung ohne Fluoreszenzzustand durchgeführt wird mit zumindest einem Test-Objektträger (10), der das Format eines Standardobjektträgers für die Lichtmikroskopie aufweist und der ausschliesslich im wesentlichen lichtstabile Teststrukturen (41) umfasst.

21. Verfahren gemäss einem der Ansprüche 18 bis 20, **dadurch gekennzeichnet, dass** es folgende Schritte umfasst:
(a) ein oder mehrere Test-Objektträger (10) werden individuell in ein Probenteil-Magazin (7') eingeschoben;
(b) dieses Probenteil-Magazin (7') wird in das Laser Scanner-Gerät (1) eingesetzt;
(c) eine Firmware in der Steuerung (40) des Laser Scanner-Geräts (1) wird aktiviert; und
(d) die aktivierte Firmware befähigt die Steuerung (40) des Laser Scanner-Geräts (1), den automatischen Transport jedes dieser Test-Objektträger (10) aus dem Probenteil-Magazin (7') auf den Probentisch (2) und weiter in eine Lagerstelle (6) des Teststeil-Magazins (9') zu steuern.

## Claims

1. Laser scanner device (1) for imaging or measuring fluorescent specimens which are disposed on specimen slides and treated with fluorescent dyes, wherein the laser scanner device (1) comprises:
- a housing (5);
- a specimen table (2) defining a specimen plane (49);
- a storage unit (4); and
- a motorized transport apparatus (3) for moving a specimen slide from the storage unit (4) to the specimen table (2) and back again,
wherein the storage unit (4) comprises a specimen part (7) for specimen slides (8) and a test part (9) for test slides (10), and wherein the specimen part (7) and the test part (9) each comprise at least one storage location (6) which is accessible to the transport apparatus (3) during the operation of the laser scanner device (1), **characterized in that**:
- the test part (9) is separated from the specimen part (7) and is arranged as a test part magazine (9') for one or several test slides (10), which test part magazine is rigidly connected to the laser scanner device (1), wherein the test part (9) is rigidly connected to a positioning plate (11) of the storage unit (4) which is movable in relation to the specimen table (2) of the laser scanner device (1), by means of which a test slide (10) stored in the test part (9) is manually not accessible to an operator in the operating state of the laser scanner device (1);
- the specimen part (7) is arranged axially above the test part (9) and can reversibly be mounted on the positioning plate (11) of the storage unit (4), wherein the specimen part (7) is arranged as a specimen part magazine (7') for a plurality of specimen slides (8), which specimen part magazine can be inserted from the outside into the housing (5) of the laser scanner device (1) and which is connected via a plug-in connection with the movable positioning plate (11);
- the positioning plate (11) is displaceable in a substantially perpendicular way relative to the specimen plane (49) of the specimen table (2), so that a random specimen slide (8,10) can be brought to the level of the specimen plane (49) defined by the specimen table (2) and can be provided for linear transport onto the specimen table (2).

2. Laser scanner device (1) according to claim 1, **characterized in that** the test part magazine (9') which is rigidly connected to the positioning plate (11) of the storage unit (4) represents a bottom stop for the inserted specimen part magazine (7').

3. Laser scanner device according to claim 1, **characterized in that** the storage locations (6) in the specimen part magazine (7') and/or in the test part magazine (9') are arranged for accommodating slides, which substantially have the dimensions of standard slides for light-optical microscopy, wherein these storage locations (6) are separated from each other by storage webs (12).

4. Laser scanner device according to claim 3, **characterized in that** each of these storage locations (6) comprise a pressing spring (13) which elastically presses a longitudinal edge (14) of an inserted slide.

5. Laser scanner device according to one of the claims 3 or 4, **characterized in that** the specimen part magazine (7') and/or the test part magazine (9') each comprise an open insert side (15), which can respectively be covered in its width at least partly by one respective flap (16) which can be pivoted away and which extends substantially over the entire stacking height of the respective magazine (7',9').

6. Laser scanner device according to claim 5, **characterized in that** the flaps (16) which can be pivoted away are rotatably fixed about one respective axis (17) arranged to the side of the magazines (7',9') and respectively comprise one angle plate (18) which extends substantially over the entire stacking height of the magazines (7',9')

7. Laser scanner device according to one of the claims 5 or 6, **characterized in that** at least the specimen part magazine (7') comprises a locking plate (20) on its side opposite of the insertion side (15), which locking plate extends substantially over the entire stacking height and which covers a part of the width of this side.

8. Laser scanner device according to one of the claims 5 to 7, **characterized in that** at least the specimen part magazine (7') comprises one or several control openings (21) for determining the presence or absence of a slide in a specific storage location (6) in at least one of the magazines (7',9').

9. Laser scanner device according to one of the claims 1 to 8, **characterized in that** it comprises a ventilation device (24) with a fan (25), an air inlet (26) with an activated-carbon filter (27) and an air outlet (28) in order to reduce the exposition of the fluorescent dyes against ozone on or in the specimens stored in the specimen part magazine (7').

10. Laser scanner device according to claim 9, **characterized in that** the ventilation device (24) comprises an additional housing (29) which substantially encloses the specimen part (7) with the specimen slides (8).

11. Laser scanner device according to one of the claims 5 to 10, **characterized in that** the transport apparatus (3) comprises an unloading slide (31), which is arranged to engage substantially parallel to the specimen plane (49) through the side opposite of the insertion side (15) of the magazines (7',9') and to transport a specimen slide (8) or a test slide (10) from its storage location (6) and out of the insertion side (15) to the specimen table (2).

12. Laser scanner device according to one of the claims 5 to 11, **characterized in that** the transport apparatus (3) comprises a loading slide (32) which is arranged for transporting a specimen slide (8) or a test slide (10) from the specimen table (2) and through the insertion side (15) to a storage location (6) in one of the magazines (7',9').

13. Laser scanner device according to one of the preceding claims, **characterized in that** the specimen table (2) is movably arranged for the transfer of specimen slides (8) or test slides (10) directly up to the storage unit (4).

14. Laser scanner device according to one of the preceding claims, **characterized in that** it comprises a control unit (40) which is arranged for controlling an automated internal instrument check performed on the basis of test slides (10).

15. Laser scanner device according to one of the preceding claims, **characterized in that** it comprises at least one test slide (10) which has the format of a standard slide for light-optical microscopy and which only comprises substantially light-stable test structures (41).

16. Laser scanner device according to claim 15, **characterized in that** the test structures (41) are chosen from a group which substantially comprises two-dimensional line patterns and flat three-dimensional materials (102).

17. Laser scanner device according to one of the preceding claims, **characterized in that** the specimen plane (49) of the specimen table (2) is arranged substantially horizontally.

18. Method for operating a laser scanner device for imaging and/or measuring fluorescent specimens which are disposed on specimen slides and treated with fluorescent dyes, **characterized in that** a laser scanner device (1) according to claim 1 is provided, wherein at least one storage location (6) for test slides (10) is provided for carrying out an instrument check, which is manually inaccessible to an operator in the operating state of the laser scanner device (1).

19. Method according to claim 18, **characterized in that** the instrument check is chosen from a group which comprises the performance of intensity and sensitivity tests, crosstalk, resolution and dynamics measurements, of laser noise and intensity measurements, and of filter blocking and filter transmission checks, and the check of the adjustment of optical components, the geometric image parameters and the image alignment.

20. Method according to claim 18 or 19, **characterized in that** a sensitivity check without fluorescent state is performed with at least one test slide (10) which has the format of a standard slide for light-optical microscopy and which exclusively comprises substantially light-stable test structures (41).

21. Method according to one of the claims 18 to 20, **characterized in that** it comprises the following steps:
(a) one or several test slides (10) are individually inserted into a specimen part magazine (7');
(b) said specimen part magazine (7') is inserted into the laser scanner device (1);
(c) a firmware is activated in the control unit (40) of the laser scanner device (1), and
(d) the activated firmware enables the control unit (40) of the laser scanner device (1) to control the automatic transport of each of said test slides (10) from the specimen part magazine (7') to the specimen table (2) and further to a storage location (6) of the test part magazine (9').

## Revendications

1. Appareil à balayage laser (1) destiné à reproduire ou mesurer des échantillons fluorescents traités avec des colorants fluorescents et installés sur des lames porte-objets, l'appareil à balayage laser (1) comprenant:
- un boîtier (5);
- un support d'échantillon (2) définissant un plan d'échantillon (49);
- une unité de stockage (4); et
- un dispositif de transport (3) motorisé pour déplacer une lame porte-objets depuis l'unité de stockage (4) jusqu'au support d'échantillon (2) et inversement,
l'unité de stockage (4) comprenant une partie échantillon (7) pour les lames d'échantillon (8) et une partie contrôle (9) pour les lames de contrôle (10), la partie échantillon (7) et la partie contrôle (9) présentant au moins un palier (6), lesquelles sont accessibles pendant le fonctionnement de l'appareil à balayage laser (1) pour le dispositif de transport (3), **caractérisé en ce que**:
- la partie contrôle (9) est séparée de la partie échantillon (7) et est réalisée sous la forme d'un magasin de la partie contrôle (9') reliée fixement à l'appareil à balayage laser (1) pour une ou plusieurs lames porte-objets (10), la partie contrôle (9) étant reliée fixement à une plaque de réglage (11) de l'unité de stockage (4) mobile par rapport au support d'échantillon (2) de l'appareil à balayage laser (1), de sorte qu'une lame porte-objets de contrôle (10) stockée dans la partie contrôle (9) n'est pas accessible manuellement à un opérateur pendant le fonctionnement de l'appareil à balayage laser (1);
- la partie échantillon (7) est agencée axialement au-dessus de la partie contrôle (9) et peut être montée de façon réversible sur la plaque de réglage (11) de l'unité de stockage (4), la partie échantillon (7) étant réalisée sous la forme d'un magasin de partie échantillon (7') pouvant être utilisé depuis l'extérieur dans le boîtier (5) de l'appareil à balayage laser (1) pour une pluralité de lames porte-objets d'échantillon (8), lequel magasin est relié à la plaque de réglage mobile (11) par le biais d'un raccordement enfichable;
- la plaque de réglage (11) peut être déplacée essentiellement perpendiculairement au plan d'échantillon (49) du support d'échantillon (2), de sorte qu'une lame porte-objets (8,10) quelconque peut être amenée au niveau du plan d'échantillon (49) défini par le support d'échantillon (2) et peut être préparée à un transport linéaire sur le support d'échantillon (2).

2. Appareil à balayage laser (1) selon la revendication 1, **caractérisé en ce que** le magasin de la partie contrôle (9') relié fixement à la plaque de réglage (11) de l'unité de stockage (4) représente une butée inférieure pour le magasin de la partie échantillon (7') qui est inséré.

3. Appareil à balayage laser selon la revendication 1, **caractérisé en ce que** les paliers (6) dans le magasin de la partie échantillon (7') et/ou dans le magasin de la partie contrôle (9') sont réalisés pour recevoir les lames porte-objets, lesquelles présentent pour l'essentiel les dimensions d'une lame porte-objets standard pour la microscopie optique, ces paliers (6) étant séparés les uns des autres par des supports de palier (12).

4. Appareil à balayage laser selon la revendication 3, **caractérisé en ce que** chacun de ces paliers (6) comprend un ressort de pression (13) qui sollicite élastiquement une arête longitudinale (14) d'une lame porte-objets utilisée.

5. Appareil à balayage laser selon l'une des revendications 3 ou 4, **caractérisé en ce que** le magasin de la partie échantillon (7') et/ou le magasin de la partie contrôle (9') présentent chacun un côté d'insertion (15) qui peut être recouvert, sur sa largeur, au moins partiellement par un clapet pivotant (16) s'étendant essentiellement sur toute la hauteur de pile du magasin correspondant (7',9').

6. Appareil à balayage laser selon la revendication 5, **caractérisé en ce que** les clapets pivotants (16) sont fixés mobiles autour d'un axe (17) agencé sur le côté des magasins (7',9') et comprennent chacun une plaque d'angle (18) qui s'étend essentiellement sur toute la hauteur de pile du magasin (7',9').

7. Appareil à balayage laser selon l'une des revendications 5 ou 6, **caractérisé en ce qu'**au moins le magasin de la partie échantillon (7') comprend sur son côté opposé au côté d'insertion (15) une plaque de blocage (20) s'étendant essentiellement sur toute la hauteur de pile, laquelle recouvre une partie de la largeur de ce côté.

8. Appareil à balayage laser selon l'une des revendications 5 à 7, **caractérisé en ce qu'**au moins le magasin de la partie échantillon (7') comprend une ou plusieurs ouvertures de contrôle (21) pour déterminer la présence ou l'absence d'une lame porte-objets dans un certain palier (6) dans au moins l'un des magasins (7',9').

9. Appareil à balayage laser selon l'une des revendications 1 à 8, **caractérisé en ce qu'**il comprend un système d'aération (24) avec un ventilateur (25), une entrée d'air (26), un filtre à charbon actif (27) et une sortie d'air (28) afin de réduire l'exposition à l'ozone des colorants fluorescents au niveau ou dans les échantillons positionnés dans le magasin de la partie échantillon (7').

10. Appareil à balayage laser selon la revendication 9, **caractérisé en ce que** le système d'aération (24) comprend un boîtier supplémentaire (29) qui renferme pour l'essentiel la partie échantillon (7) avec les lames porte-objets d'échantillon (8).

11. Appareil à balayage laser selon l'une des revendications 5 à 10, **caractérisé en ce que** le dispositif de transport (3) comprend un poussoir de déchargement (31) qui vient s'engrener, essentiellement parallèlement au plan d'échantillon (49), par le côté opposé au côté d'insertion (15) des magasins (7',9') et est réalisé pour transporter une lame porte-objets d'échantillon (8) ou une lame porte-objets de contrôle (10) depuis son palier (6) et depuis le côté d'insertion (15) vers le support d'échantillon (2).

12. Appareil à balayage laser selon l'une des revendications 5 à 11, **caractérisé en ce que** le dispositif de transport (3) comprend un tiroir de chargement (32) qui est conçu pour transporter une lame porte-objets d'échantillon (8) ou une lame porte-objets de contrôle (10) depuis le support d'échantillon (2), par le côté d'insertion (15), vers une zone de stockage (6) dans l'un des magasins (7',9').

13. Appareil à balayage laser selon l'une des revendications précédentes, **caractérisé en ce que** le support d'échantillon (2) est réalisé mobile pour le transfert des lames porte-objets d'échantillon (8) ou les lames porte-objets de contrôle (10) jusqu'à immédiatement avant l'unité de stockage (4).

14. Appareil à balayage laser selon l'une des revendications précédentes, **caractérisé en ce qu'**il comprend une commande (40) qui est conçue pour commander un contrôle des instruments automatisé, interne et réalisé à l'aide des lames porte-objets de contrôle (10).

15. Appareil à balayage laser selon l'une des revendications précédentes, **caractérisé en ce qu'**il comprend au moins une lame porte-objets de contrôle (10) qui présente le format d'une lame porte-objets standard pour la microscopie optique et qui comprend exclusivement des structures de test (41) essentiellement stables à la lumière.

16. Appareil à balayage laser selon la revendication 15, **caractérisé en ce que** les structures de test (41) sont choisies parmi un groupe comprenant essentiellement des motifs bidimensionnels et des matériaux (102) plats et tridimensionnels.

17. Appareil à balayage laser selon l'une des revendications précédentes, **caractérisé en ce que** le plan d'échantillon (49) du support d'échantillon (2) est agencé essentiellement horizontal.

18. Procédé de fonctionnement d'un appareil à balayage laser pour reproduire et/ou mesurer des échantillons fluorescents, traités avec des colorants fluorescents installés sur des lames porte-objets, **caractérisé en ce qu'**il est utilisé un appareil à balayage laser (1) selon la revendication 1, dans lequel il est prévu au moins un palier (6) pour la lame porte-objets de contrôle (10) pour effectuer un contrôle des instruments, lequel palier n'est pas accessible manuellement par l'opérateur pendant le fonctionnement de l'appareil à balayage laser (1).

19. Procédé selon la revendication 18, **caractérisé en ce que** le contrôle des instruments est choisi parmi un groupe comprenant la réalisation de tests d'intensité et de sensibilité, de mesures du «Cross Talk», de définition et de dynamique, de mesures de bruit et d'intensité du laser et de contrôle de blocage et de transmission des filtres, ainsi que le contrôle de l'alignement des composants optiques, des paramètres d'image géométriques et de l'orientation de l'image.

20. Procédé selon la revendication 18 ou 19, **caractérisé en ce qu'**il est réalisé un contrôle de la sensibilité sans fluorescence avec au moins une lame porte-objets de contrôle (10) qui présente le format d'une lame porte-objets standard pour la microscopie optique et qui comprend exclusivement des structures de test (41) essentiellement stables à la lumière.

21. Procédé selon l'une des revendications 18 à 20, **caractérisé en ce qu'**il comprend les étapes suivantes:
(a) une ou plusieurs lames porte-objets de contrôle (10) sont insérées individuellement dans un magasin de la partie échantillon (7');
(b) ce magasin de la partie échantillon (7') est placé dans l'appareil à balayage laser (1);
(c) un micrologiciel est activé dans la commande (40) de l'appareil à balayage laser (1); et
(d) le micrologiciel activé active la commande (40) de l'appareil à balayage laser (1) à diriger le transport automatique de chacune de ces lames porte-objets de contrôle (10) depuis le magasin de la partie échantillon (7') sur le support d'échantillon (2) puis dans un palier (6) du magasin de la partie contrôle (9').
